## Europäisches Patentamt
## European Patent Office
## Office européen des brevets

(19)

(11) Publication number: **0 030 612**
**B1**

(12) **EUROPEAN PATENT SPECIFICATION**

(45) Date of publication of patent specification: **08.08.84**

(51) Int. Cl.³: **G 06 F 11/10**

(21) Application number: **80106632.5**

(22) Date of filing: **29.10.80**

(54) Method of correcting double errors in a data storage apparatus and data storage apparatus.

(30) Priority: **14.12.79 US 103633**

(43) Date of publication of application:
**24.06.81 Bulletin 81/25**

(45) Publication of the grant of the patent:
**08.08.84 Bulletin 84/32**

(84) Designated Contracting States:
**DE FR GB**

(56) References cited:
**DE - B - 2 838 005**
**FR - A - 2 146 081**
**US - A - 4 107 652**

**IEEE TRANSACTIONS ON COMPUTERS, vol C-27, no. 8, August 1978, New York, US C. SUNDBERG "Erasure and error decoding for semiconductor memories", pages 696-705**
**IBM TECHNICAL DISCLOSURE BULLETIN, vol. 15, no. 12, May 1973, New York, US D. BOSSEN et al. "Intermittent error isolation in a double-error environment" page 3853**

(73) Proprietor: **International Business Machines Corporation**
**Old Orchard Road**
**Armonk, N.Y. 10504 (US)**

(72) Inventor: **Bossen, Douglas Craig**
**42 Cathy Road**
**Poughkeepsie New York 12603 (US)**

(74) Representative: **Grant, Iain Murray**
**IBM United Kingdom Patent Operations Hursley Park**
**Winchester, Hants, SO21 2JN (GB)**

**0 030 612**

(56) References cited:
IEEE TRANSACTIONS ON COMPUTERS, vol. C-27, no. 6, June 1978 New York, US J. STIFFLER "Coding for random-access memories", pages 526-531
IEEE TRANSACTIONS ON INFORMATION THEORY, vol. IT-15, no. 5 September 1969 New York, US K. LEVITT "Cellular arrays for the parallel implementation of binary error-correcting codes", pages 597-607
IBM JOURNAL OF RESEARCH AND DEVELOPMENT, vol. 24, no. 3, May 1980, New York, US D. BOSSEN and M. HSIAO "A system solution to the memory soft error problem", pages 390-397

## Description

The present invention relates to augmenting the correction capability of error correction mechanisms in data storage apparatus.

Errors in data stored in memories can be said to have two major causes. One cause is the intrinsic physical failure of memory components which usually produces a permanent or "hard" error. The other cause is non-destructive environmental phenomena which causes errors which for the most part are transient, intermittent or "soft" errors. In present day monolithic memory chips, soft errors due to external or environmental interference, are more prevalent than hard errors resulting from component failures. Laboratory evidence shows that the alpha-particle induced failure rate alone is one to two orders of magnitude higher than the memory chips basic intrinsic failure rate. Furthermore, alpha-induced failure rates usually are higher at higher chip densities indicating that soft errors will be of even greater significance in the future.

Error correcting codes have traditionally been used in improving reliability in the storage area of computers. In the semiconductor memory area, the most widely used codes are single error correcting and double error detecting SEC/DED codes. This class of codes is most effective in memory systems organized on a one bit per card, chip or module basis. With the one bit per card, chip or module organization, multiple errors caused by the failure of a card, chip or module will only cause a single bit error in any encoded data word. The mapping of component failures into single bit errors has resulted in the use of delayed system maintenance procedures that allow component failures to accumulate to some threshold level before they are repaired or replaced. This is done under the assumption that the errors caused by the component failures will be corrected by the SEC/DED error correction system. However, with the high levels of soft errors found in modern semiconductor memories, these system maintenance strategies cause a high uncorrectable error (UE) rate as a result of double errors caused by the lining up of a hard error from a components failure with a soft error resulting from alpha-particle bombardment. To reduce the number of uncorrectable errors, maintenance strategies could be altered so that fewer component failures are allows to accumulate. This of course causes higher replacement rates for storage components, and thus higher parts and service costs. Alternatively double error correcting (DEC) codes could be substituted for the SEC/DED codes to correct multi-bit errors resulting from the lining up of a hard error with a soft error. However this would require greater redundancy in the encoded data words and more complex encoding and decoding circuits. Therefore, both these solutions exact a heavy overhead burden and should not be resorted to unless absolutely necessary.

In the past single error correcting and double error detecting codes have been used to correct more than one error. For instance, U.S. Patent 3,656,107, suggest that bits in the data word with the double error be changed one after another until the syndrome indicates that the double error is eliminated. Then a new syndrome is generated to locate the single remaining error. In addition, U.S. Patent 4,139,148 describes correcting double bit error using a SEC/DED code by saving of previously occurring single error syndromes and using them to correct one error bit when double bit error occurring in the same word in storage. Our French Patent FR—A—2,146,081 and its equivalent GB—A—1,402,613 disclose an error correction system in which each word, including both data bits and check bits, read from a storage location is both retained in a register and passed to first error detecting and correcting mechanism. If there is no error or a correctable error, appropriate action is taken and the retained word is not used, the retaining register being rewritten on the next read cycle. For uncorrectable errors, the first mechanism passes the word to a second error mechanism which endeavours to locate hard errors which are fed back and used to adjust the retained form of the word after which, a switch having been repositioned, the altered retained word is passed to the first mechanism which, hopefully, will remove transient error by a processing operation independent of the processing operation it first performed. Furthermore, we have considered a proposal to use an error correction scheme which involves saving the data word and syndrom when the data word contains too many errors for the error correcting code to correct. The memory location where the data word was stored is then checked using ancillary correction means to locate stuck bits in the data word location. A syndrome is thereafter generated for a data word with stuck bits in the positions located by the ancillary process. If this syndrome matches the stored syndrome the word is corrected by inverting the data bits in the stored data word at the stuck bit positions. If it doesn't, it has been suggested that the actual bits among the faulty bits in error can be determined by "iterative partitioning" of the faulty bits and determining the error syndrome for each portion.

It must be pointed out that the correcting mechanisms have to operate in the context of a flow of data at its slowest point as, relatively to a processing unit, a data storage unit cycles very slowly. The prior proposals, particularly the last, are highly time expensive, or are hit and miss methods or require much extra hardware. What is sought by the present invention is a methodical, fast and inexpensive mechanism for augmenting the correcting capability of the correcting mechanism of a data store.

Accordingly the present invention provides a method of correcting double errors in a data storage apparatus comprising a storage array having an input/output interface including a code-based single error correcting and double error detecting mechanism — SEC/DED — deriving syndromes from read storage words, and an ancillary array test mechanism — ATM —, the latter being used when a double error is indicated by the generated syndrome, characterised in that

(a) data read from a location in the array and detected to be in error but uncorrectable by the SEC/DED, together with the corresponding syndrome $S_u$ derived from it, are temporarily stored in the input/output interface means, whereafter,

(b) the ATM transmits test words to the storage array and causes the writing of these test words into the said location and the generation of syndromes by the SEC/DED upon subsequent re-reading of these test words therefrom, which syndromes are evaluated by majority decision as to the indication of a true uncorrectable error condition or the existence of one hard error resulting in a syndrome $S_h$ indicating this hard error, in which case

(c) the two syndromes $S_u$ and $S_h$ are exclusive-ORed to provide a final syndrome $S_\alpha$ which is used, if valid within the SEC/DED code, to correct the temporarily stored data.

The invention provides also a data storage apparatus for carrying out the method.

The present invention will be described further by way of example with reference to an embodiment of the invention as illustrated in the accompanying drawings in which:—

Figure 1 is an overall diagram of a bit per card organized memory;

Figure 2 illustrates the H-matrix of a single error correcting double error detecting code;

Figure 3 is a diagram of the error correcting mechanism of the interface of the memory of Fig. 1; and

Figure 4 illustrates the test patterns for locating a hard error used by the mechanism of Fig. 3.

The present invention provides data storage apparatus including a storage array 12 coupled to the outside world through an interface which includes two error mechanisms, the one being a code based error detecting and correcting mechanism (ECC), the other being an array testing mechanism (ATM) which is ancillary in the sense that, should the ECC suffice, the ATM is not used. The ECC, naturally, detects more errors than it can correct and the thrust of the invention is that, where circumstances permit its correction capability is enhanced towards that of its detecting capability by combining its operation with that of the ATM. When uncorrectable errors are detected by the ECC, the data and the error syndrome are saved in the interface, the ATM is invoked to determine hard errors in the storage array and, if such detected errors are determined by test to be of a number compatible with the detecting capacity of the ECC, a syndrome is generated for the detected errors, which syndrome is combined with the stored syndrome, tested for capatibility with the ECC and used by the ECC for correction.

Naturally, the details of any specific embodiment depend on the parameters of the apparatus so that the following assumptions have been made, for the embodiment selected for detailed description, it being understood that the requirement of the embodiment derived from such assumptions are particular to the embodiment and the assumptions:—

(i) the storage array is organized into addressable locations having a 72-bit capacity; and

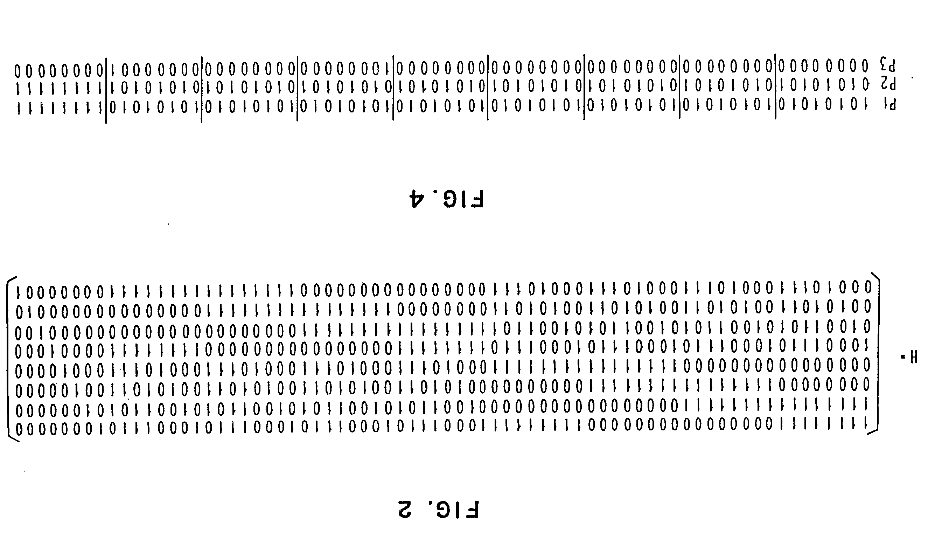

(ii) the ECC is based on a known single error correcting/double error detecting code, the H matrix for which is illustrated in FIG. 2. This code will generate 8 check bits for 64 data bits, the combined 72 bits being compatible with the storage array location bit capacity. The basic properties of this code are described in detail in U.S. Patent No. 3,623,155.

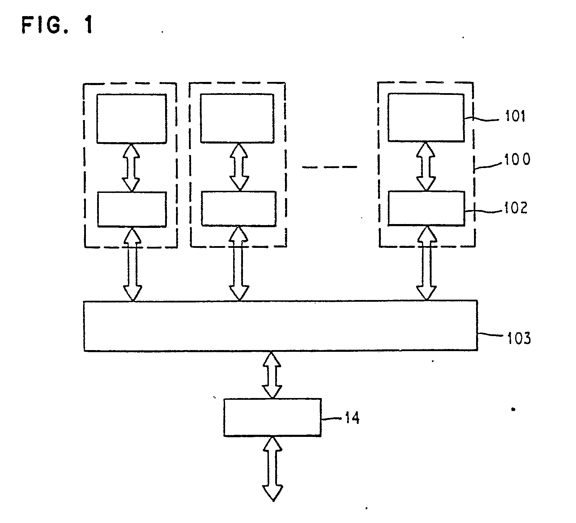

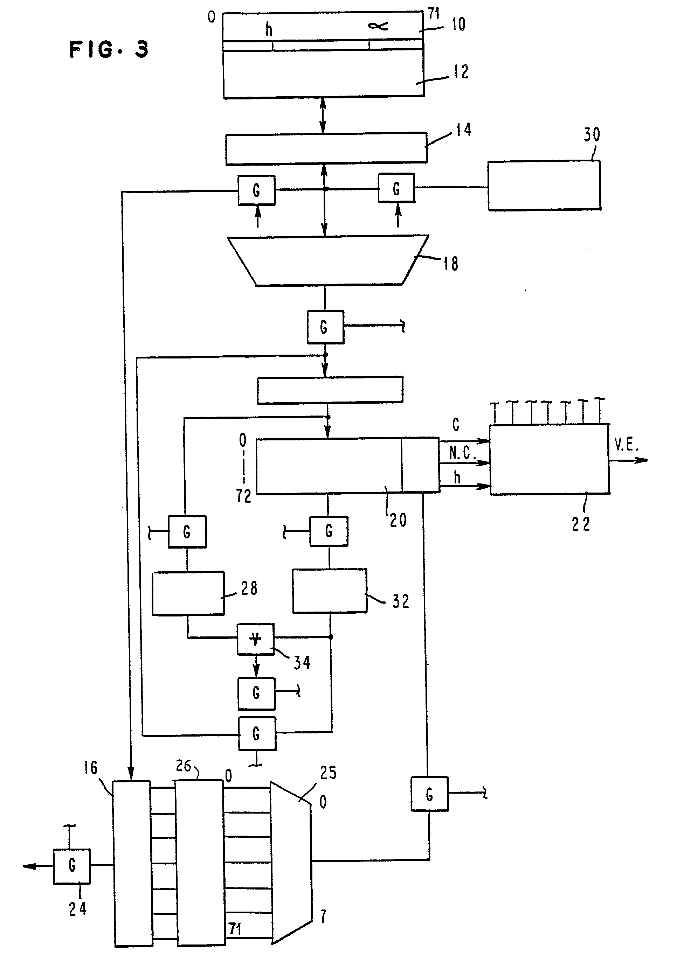

Briefly, the storage array 12 is in the form of 72 cards 100 each carrying a plurality of bit storage positions 101 and associated accessing controls 102, the array functioning to access one bit position per card and to transfer data between the cards and an internal register 103 which in turn communicates with the storage data register 14 which appears in both FIGS. 1 and 3 and comprises the array side of the input/output interface for the apparatus. It is worth noting that certain "constant" errors can be expected with such an arrangement (for example due to card failure) as well as transient errors (for example due to alpha-particle bombardment).

The interface is shown in FIG. 3. A word 10 accessed from the array 12 into storage data register 14, is transmitted to an output register 16 and to a syndrome generator 18. The syndrome generator 18 generates a syndrome which is fed to an associative store 20. The associative store 20 is a 73 word memory storing each of the syndromes for a single bit in error at any one of the 72 bit locations of the word plus the syndrome for no bits in the word in error. Stored along with the syndrome is a 7 bit number identifying the position of the bit error in binary sequence. When an interrogation of the table 20 results in a match condition the stored syndrome and the 7 bit binary number identifying the bit position in error are read from the associative store.

Assume that the syndrome generator 18 produces a syndrome of all zeros, or in other words, a syndrome which indicates no bits in the accessed word are in error. Stored along with the syndrome in associative store 20 with the all zero syndrome would be a string of seven additional zeros indicating that there is no error. This string of seven zeros is fed to a controller 22 which then generates a gate signal for gate 24 allowing the error free data word stored in register 16 to be transmitted to the processor. Again, assume that the syndrome generator generates a syndrome $S_h$ that would indicate that a single bit error has occurred. Since all the syndromes identifying single bit errors are stored in the table 20, interrogating with the syndrome $S_h$ results in the syndrome $S_h$ and the location h of the bit in error in 7 bit binary notation being read out of the associative store 20. The seven bit binary location of the bit in error is fed to the decoder 25 which informs the bit inverter 26 of the particular bit h in error causing the inverter to correct the bit by inverting that bit in the word stored in the output registers 16. The controller than generates the gate 24 to transmit the corrected word to the processor.

Finally, assume now that a syndhrome generator 18 generates a syndrome $S_u$ that does not match with any of the 73 syndromes stored in the associative store 20. Associative store 20 then generates a no compare NC and feed it to the error control 22. Upon receipt of a no compare signal, the error control 22 stores the uncorrectable error syndrome in the SU register 28. It also transmits test words $P_1$, $P_2$ and $P_3$ from the store 30 to the storage data register 14 for reading into the flawed storage location 10. As each of these words is read into the memory 12 and then read out, the syndrome generator 18 generates the appropriate one of the syndromes $S_1$, $S_2$ and $S_3$ when one of the syndromes $S_1$, $S_2$, $S_3$ is received by the associative store 20 from the syndrome generator 18 the associative store generates a compare or a no compare signal and with a compare signal, an error location. If there are three no compare signals, the error control terminates the error correction process and indicates an uncorrectable error condition exists. Likewise, if the compare signals generated for two or more of the syndromes $S_1$, $S_2$ and $S_3$ point to different bits in error the controller 20 terminates the error correction process and indicates a true uncorrectable error condition exists. However, if the interrogations by the syndromes $S_1$, $S_2$ and $S_3$ result in the identification of only a single memory location (implying two syndromes are equal either corresponding to NO ERROR or to the same error at location h) the controller loads the syndrome $S_h$ for the location identified by the three syndromes into the $S_h$ register 32 and then feeds the contents of both registers 28 and 32 into Exclusive OR circuit 34 to perform an Exclusive OR function of the two syndromes $S_u$ and $S_h$. The output (composite syndrome) $S_\alpha$ of the Exclusive OR circuit 34 is fed back into the associative store 20 to determine if it matches any of the syndromes stored in the associative store 20. If it does not, a no compare signal is generated by the associative store 20 and fed to the controller 22 which then terminates the error correction process and indicates a true uncorrectable error condition exists. If it does, the error controller receives a compare signal and the location $\alpha$ of the bit in error is transmitted to the decoder from the store in 7 bit binary notation to invert the data in bit location of the register 16. The syndrome $S_h$ is then fed from register 32 to the store 20 which feeds the location of bit h to the decoder 25. The decoder 25 then instructs the bit inverter 26 to invert the bit h. The data stored in register 16 is now correct and the controller 22 opens the gate 24 and transmits the data to the processor.

Turning now to the justification for the arrangement just described it will be noted that, with an error indication and a match in one of the columns of the matrix in Figure 2 a single error can be assumed in the matched column's bit position. If there is an error indication and no match in any column of the matrix an Uncorrectable Error (UE) has been detected. Likewise, an error indication with an even number of 1's in the 8 check bits of the matrix indicates an even number of errors which is an uncorrectable error condition with the particular code.

In the three cases stated above, only the last two cause an uncorrectable error. Since the memory is arranged as in Figure 1, errors are assumed to be statistically independent. Therefore, it can be validly assumed that within a given code word double bit errors are much more likely to happen than triple, quadruple or higher multiple bit errors. Making this assumption, let h be the bit location of the "hard" error where $0 \leq h \leq 71$ and let $\alpha$ be the bit location of the "soft" error where $0 \leq \alpha \leq 71$ and $\alpha \neq h$. Then

$$S_u = S_h \veebar S_\alpha \qquad (1)$$

where $S_u$ is the syndrome for the data word with the uncorrectable double error and $S_h$ and $S_\alpha$ are the syndromes for data words with correctable single errors in locations h and $\alpha$ respectively.

Relationship (1) can be used to correct those double bit errors made up of one hard error and one soft error. When the ECC hardware detects an uncorrectable error condition in an encoded data word stored in some location in memory, that encoded data word is saved at 16 along with the syndrome SU, at 28 generated by the ECC hardware from that encoded word.

The test patterns shown in Figure 4 and stored at 30 are then used to locate the bit position of the hard error by interrogating the memory location. It will be noted that each pattern is a valid word (data plus check bits) within the code and that each bit position, when exercised by $P_1$ followed by $P_2$ followed by $P_3$ will be set to 1 and 0 so that either form of hard error will show up either once or twice, but not three times. each of the patterns $P_1$, $P_2$ and $P_3$ is written into the location and read out of the location. Syndromes $S_1$, $S_2$ and $S_3$ are generated from the data read out from the location. Each of these three syndromes is decoded 5 by the ECC circuitry to determine the locations of any bits in error. If there is no valid single error syndrome among the three syndromes or if the syndromes $S_1$, $S_2$ and $S_3$ are inconsistent, in that each shows no error or error is shown in more than one bit position), the correcting scheme is terminated 6 and a true uncorrectable error condition is indicated.

If the three syndromes $S_1$, $S_2$ and $S_3$ are consistent, it is assumed that the bit position indicated by the set is the bit location h of the hard error. The syndrome $S_h$ is then generated assuming only that one error in bit position h and then the syndrome $S_\alpha$ is calculated by Exclusive ORing the stores syndrome $S_u$ with the computed syndrom $S_h$ or $S_\alpha = S_u \forall S_h$.

The final consistency test is checking syndrome $S_\alpha$ to determine if it is a valid single error syndrome. If it is, the bit position $\alpha$ of the soft error is known and the stored word can be corrected by inverting the bits at locations $\alpha$ and h. If not, an indication is given that a true uncorrectable error condition exists.

From this it will be apparent that, when the sum of the hard errors that can be validly ascertained by diagnostic testing and the transient errors lies within the detecting capability of the ECC code and the number of transient errors lies within the correcting capability of the ECC code, whatever those may be, the kind of arrangement just described can be used to augment the correcting capability of the ECC to approach its detecting capability. Further, the specific approach of holding the data and initial syndrome, generating an "artificial" hard error syndrome, combining the held and generated syndromes, means that relatively little hardware need be introduced over and above that of the ECC as the correcting is accomplished within the correcting capability and therefore potentially by the ECC hardware.

Further it will be noted that, as far as can be determined, miscorrection is positively avoided and failing correction is aborted as soon as is practicable.

## Claims

1. A method of correcting double errors in a data storage apparatus comprising a storage array (12) having an input/output interface (figure 3) including a code-based single error correcting and double error detecting mechanism — SEC/DED — (18, 20, 22, 26, 16) deriving syndromes from read storage words, and an ancillary array test mechanism — ATM — (30), the latter being used when a double error is indicated by the generated syndrome, characterised in that

(a) data read from a location in the array and detected to be in error but uncorrectable by the SEC/DED, together with the corresponding syndrome $S_u$ derived from it, are temporarily stored in the input/output interface means (16, 28), whereafter.

(b) the ATM transmits words ($P_1$, $P_2$, $P_3$) to the storage array and causes the writing of these test words into the said location and the generation of syndromes by the SEC/DED upon subsequent re-reading of these test words therefrom, which syndromes are evaluated by majority decision as to the indication of a true uncorrectable error condition or the existence of one hard error resulting in a syndrome $S_h$ indicating this hard error, in which case

(c) the two syndromes $S_u$ and $S_h$ are exclusive-ORed to provide a final syndrome $S_\alpha$ which is used, if valid within the SEC/DED code, to correct the temporarily stored data.

2. A method according to claim 1, characterised in that the test words used by the ATM represent data plus check bit combinations, valid under the SEC/DED code, the words when written into and read from a word location in the storage array sequentially driving each bit position of that location at least once into each significant bit state.

3. A method according to claims 1 or 2, characterised in that the syndrome testing within the SEC/DED as to the kind of error is performed by means of an associative store, the search field of which contains all usable syndromes, the result field containing gating control patterns appropriate to the corresponding search field syndromes.

4. Data storage apparatus for carrying out the method of claims 1, 2 or 3, characterised in that

the SEC/DED includes individual stores (16, 28) for storing, respectively, data detected to be in error but uncorrectable by the SEC/DED, and the corresponding syndrome, together with an associative store (20) for syndrome testing; and in that

the ATM incorporates a test pattern store (30) containing a set of test words.

## Revendications

1. Procédé pour corriger des erreurs doubles dans un appareil de mémorisation de données comprenant un réseau de mémoire (12) comportant une interface d'entrée/sortie (figure 3) incluant un mécanisme de correction d'erreurs simples et de détection d'erreurs doubles utilisant un code — SEC/DED — (18, 20, 22, 26, 16) dérivant des syndromes à partir de mots de mémorisation lus et un mécanisme auxiliaire de contrôle de réseau — ATM — (30), ce dernier étant utilisé lorsqu'une erreur double est indiquée par le syndrome produit, caractérisé en ce que

(a) des données lues à partie d'un emplacement du réseau et détectées comme étant erronées, mais ne pouvant pas être corrigées par le SEC/DED, ainsi que le syndrome correspondant $S_u$ dérivé de ce dernier sont mémorisées temporairement dans les moyens d'interface d'entrée/de sortie (16, 28), à la suite de quoi,

(v) le ATM transmet des mots d'essai ($P_1$, $P_2$, $P_3$) au réseau de mémoire et provoque l'en-

9 **0 030 612** 10

registrement des ces mots d'assai audi emplacement et la production de syndromes par le SEC/DED lors de la relecture ultérieure de ces mots d'essai hors dudit réseau, lesquels syndromes sont évalués par un décision majoritaire qui concerne l'indication d'une condition d'erreur vraie ne pouvant pas être corrigée ou l'existence d'une erreur permanente aboutissant à la production d'un syndrome $S_h$ indiquant cette erreur permanente, auquel cas

(c) les deux syndromes $S_u$ et $S_h$ sont combinés selon une combinaison logique OU-Exclusif de manière à fournir un syndrome $S_\alpha$ qui est utilisé, s'il est correct dans le code SEC/DED pour corriger les données mémorisées temporairement.

2. Procédé selon la revendication 1, caractérisé en ce que les mots d'essai utilisés par le ATM représentent des combinaisons de données plus le bit de contrôle, correctes selon le code du SEC/DED, les mots étant enregistrés dans et lus hors d'un emplacement de mot dans le réseau de mémoire, avec une commande séquentielle effectuée de chaque position binaire de cet emplacement, au moins une fois, dans chaque étant de bit significatif.

3. Procédé selon le revendications 1 ou 2, caractérisé en ce que le contrôle des syndromes à l'intérieur du SEC/DED en ce qui concerne le type d'erreur est effectué au moyen d'une mémoire associative, dont la zone de recherche contient tous les syndromes utilisables, la zone des résultats contenant des profils de commande de déclenchement appropriées pour les syndromes correspondants de la zone de recherche.

4. Appareil de mémorisation de données pour la mise en oeuvre du procédé des revendications 1, 2 ou 3, caractérisé en ce que le SEC/DED contient des mémoires individuelles (16, 28) servant à mémoriser respectivement des données détectées comme étant erronées, mais ne pouvant pas être corrigées par le SEC/DED, et le syndrome correspondant, ainsi qu'une mémoire associative (20) pour le contrôle des syndromes; et que le ATM contient un mémoire (30) de jeux d'essai contenant un ensemble de mots d'essai.

## Patentansprüche

1. Verfahren zur Korrektur von Doppelfehlern in einem Datenspeichergerät mit einem Speicherfeld (12), welches eine Eingabe/Ausgabe-Schnittstelle (Fig. 3) aufweist, welche einen auf einem Code beruhenden Einzelfehlerkorrektur- und Doppelfehlerfeststellungsmechanismus — SEC/DED — (18, 20, 22, 26, 16), welcher Syndrome aus gelesenen Speicherwörtern ableitet, und einen zusätzlichen Feldprüfmechanismus — ATM — (30) umfaßt, wobei letzterer benutzt wird, wenn ein Doppelfehler durch das erzeugte Syndrom angezeigt wird, dadurch gekennzeichnet, daß

(a) von einer Stelle in dem Feld ausgelesene Daten, die als fehlerhaft aber als durch den SEC/DED unkorrigierbar festgestellt wurden, zusammen mit dem daraus abgeleiteten Syndrom $S_u$ in den Eingabe/Ausgabe-Schnittstellenmitteln (16, 28) zwischengespeichert werden, wonach

(b) der ATM Prüfwörter ($P_1$, $P_2$, $P_3$) auf das Speicherfeld überträgt und das Einschreiben dieser Prüfwörter in die Stelle und die Erzeugung von Syndromen durch den SEC/DED bei nachfolgenden Wiederauslesen dieser Prüfwörter bewirkt, wobei die Syndrome durch Majoritätsentscheidung hinsichtlich der Anzeige einer wahren unkorrigierbaren Fehlerbedingung oder des Vorhandenseins eines einzigen Hartfehlers, der ein diesen Hartfehler anzeigendes Syndrom $S_h$ zur Folge hat, ausgewertet werden, in welchem Fall

(c) die beiden Syndrom $S_u$ und $S_h$ exclusiv-ODER verknüpft werden, um ein endgültiges Syndrom $S_\alpha$ zu liefern, welches, falls gültig nach dem SEC/DED-Code, zur Korrektur der zwischengespeicherten Daten verwendet wird.

2. Verfahren nach Anspruch 1, dadurch gekennzeichnet, daß die durch den ATM verwendeten Prüfwörter Daten-plus-Prüfbit-Kombination darstellen, die nach dem SEC/DED-Code gültig sind, wobei Wörter beim Einlesen in eine und Auslesen aus einer Wortstelle im Speicherfeld sequentiell jede Bitposition dieser Stelle wenigstens einmal in jeden wertigen Bitzustand steuern.

3. Verfahren nach Anspruch 1 oder 2, dadurch gekennzeichnet, daß die Syndromprüfung innerhalb des SEC/DED hinsichtlich der Art von Fehler mittels eines Assoziativspeichers durchgeführt wird, dessen Suchfeld alle verwendbaren Syndrome enthält, und dessen Ergebnisfeld Torungssteuermuster enthält, die für die entsprechenden Suchfeldsyndrome geeignet sind.

4. Datenspeichergerät zur Durchführung des Verfahrens nach den Ansprüchen 1, 2 oder 3, dadurch gekennzeichnet, daß

der SEC/DED einzelne Speicher (16, 28) zur Speicherung von als fehlerhaft aber als durch den SEC/DED unkorrigierbar festgestellten Daten bzw. des entsprechenden Syndroms zusammen mit einem Assoziativspeicher (20) für die Syndromprüfung enthält; und daß

der ATM einen eine Satz von Prüfwörten enthaltenden Prüfmusterspeicher (30) in sich schließt.

7

FIG. 1

FIG. 2

FIG. 4

FIG. 3

0 030 612